(19) Europäisches Patentamt
European Patent Office
Office européen des brevets

(11) **EP 4 112 580 A1**

(12) **EUROPÄISCHE PATENTANMELDUNG**

(43) Veröffentlichungstag:
04.01.2023  Patentblatt 2023/01

(21) Anmeldenummer: 22182466.7

(22) Anmeldetag: **01.07.2022**

(51) Internationale Patentklassifikation (IPC):
*C04B 35/01* (2006.01)   *C04B 35/468* (2006.01)
*C04B 35/47* (2006.01)   *C04B 35/495* (2006.01)
*C04B 35/626* (2006.01)   *C04B 35/64* (2006.01)
*C04B 35/645* (2006.01)   *H01G 4/12* (2006.01)

(52) Gemeinsame Patentklassifikation (CPC):
**C04B 35/01; C04B 35/4682; C04B 35/47;
C04B 35/495; C04B 35/6261; C04B 35/62635;
C04B 35/6264; C04B 35/62695; C04B 35/64;
C04B 35/645; H01G 4/1227;** C04B 2235/3206;
C04B 2235/3213; C04B 2235/3215;
C04B 2235/3217;   (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **02.07.2021   DE 102021206990**

(71) Anmelder:
• **Karlsruher Institut für Technologie
76131 Karlsruhe (DE)**
• **Technische Universität Darmstadt
64289 Darmstadt (DE)**

(72) Erfinder:
• **Häuser, Kevin
76149 Karlsruhe (DE)**
• **Binder, Joachim
76227 Karlsruhe (DE)**
• **Maune, Holger
64283 Darmstadt (DE)**
• **Agrawal, Prannoy
64285 Darmstadt (DE)**
• **Jakoby, Rolf
61191 Rosbach (DE)**

(74) Vertreter: **Altmann Stößel Dick Patentanwälte
PartG mbB
Theodor-Heuss-Anlage 2
68165 Mannheim (DE)**

(54) **KOMPOSITMATERIAL UND VERFAHREN ZUM HERSTELLEN EINES KOMPOSITMATERIALS UND DESSEN ANWENDUNG ALS KONDENSATORWERKSTOFF**

(57)   Es wird ein Kompositmaterial (100) vorgeschlagen. Das Kompositmaterial (100) umfasst mindestens ein dielektrisches Material (102) und mindestens ein paraelektrisches Material (104). Das dielektrische Material (102) ist zumindest teilweise als Cluster (106) ausgebildet und das paraelektrische Material (104) ist perkoliert. Weiterhin wird ein Verfahren zum Herstellen eines Kompositmaterials (100) und dessen Anwendung als Kondensatorwerkstoff vorgeschlagen.

Fig. 1

EP 4 112 580 A1

(52) Gemeinsame Patentklassifikation (CPC): (Forts.)
C04B 2235/3232; C04B 2235/3236;
C04B 2235/3244; C04B 2235/3251;
C04B 2235/3258; C04B 2235/326;
C04B 2235/3281; C04B 2235/3282;
C04B 2235/3291; C04B 2235/3409;
C04B 2235/3445; C04B 2235/5445;
C04B 2235/5454; C04B 2235/5463;
C04B 2235/5472; C04B 2235/604;
C04B 2235/6562; C04B 2235/6565;
C04B 2235/6567; C04B 2235/666; C04B 2235/80

**Beschreibung**

Technisches Gebiet

Die vorliegende Erfindung betrifft das Gebiet der Funktionskeramiken sowie der keramischen Prozesstechnik. Genauer betrifft die vorliegende Erfindung die Herstellung von steuerbaren Mikrowellendielektrika und darauf basierender Bauelemente und Schaltungen auf keramischer Basis (Ferroelektrika) mit geringen dielektrischen Verlusten und hoher Steuerbarkeit.

Technischer Hintergrund

In der Technik gewinnen maßgeschneiderte Keramiken zunehmend an Bedeutung. Auf spezifische Anforderungen hin optimierte Keramiken stellen in vielen technischen Bereichen Schlüsselwerkstoffe dar, ohne die viele Technologien technisch nicht machbar wären. Moderne Hochleistungskeramiken unterscheiden sich daher auch in den Eigenschaften fundamental von den allgemein bekannten, klassischen Keramiken. Wie diese bestehen sie aus nichtmetallischen, anorganischen Werkstoffen. Jedoch werden sie synthetisch unter reinen und kontrollierten Bedingungen hergestellt und erhalten erst dadurch ihre spezifischen Eigenschaften.

Allgemein lassen sich technische Keramiken in zwei große Gruppen einordnen. Zum einen sind dies die Strukturkeramiken, die grundsätzlich darauf ausgelegt sind, ihre Form und Struktur auch unter starker mechanischer, biologischer, chemischer oder thermischer Belastung beizubehalten.

Die andere Untergruppe stellen die Funktionskeramiken dar. Sie weisen spezielle Eigenschaften auf. Diese Eigenschaften sind zum Beispiel optische, elektrische, dielektrische und magnetische Funktionalitäten.

Eine besondere Stellung hat die Materialklasse der Funktionskeramiken, insbesondere die mit dielektrischen Eigenschaften, inne. Sie hat durch die vielfältigen Eigenschaften ihrer Materialien einen maßgeblichen Anteil zur Entwicklung unserer Industriegesellschaft beigetragen. Durch die rasante Verbreitung der Mikroelektronik in den letzten Jahren haben Funktionskeramiken extrem an Bedeutung gewonnen.

Elektronische Schaltungen kommen ohne die Implementierung von dielektrischen Funktionskeramiken heute nicht mehr aus. Die Leistungsfähigkeit von elektronischen Schaltungen hängt dabei in hohem Maße von der Leistungsfähigkeit der verwendeten, dielektrischen Keramiken ab.

Insbesondere Hochfrequenzanwendungen in Kommunikations- und Sensorsystemen sowie in der kabellosen Datenübertragung bedürfen qualitativ hochwertiger dielektrischer Materialien. Anwendungen können etwa Steuersysteme von Radarantennen mit elektronisch steuerbarer Strahlschwenkung sein. Diese verwenden so genannte Phasenschieber, welche die Abstrahlrichtung von phasengesteuerten Gruppenantennen (sog. "phased array"-Antennen) elektronisch steuerbar machen. Aber auch abstimmbare Hochfrequenzfilter, - modulatoren, -verstärker und -oszillatoren für Anwendungen im Mobilfunk (GSM, UMTS, Bluetooth, W-LAN etc.) sind möglich. Darüber hinaus sind vielfältige Anwendungen in der kontaktlosen Sensorik möglich (z.B. RFID (Radio Frequency Identification)-Anwendungen). Ein weiteres Anwendungsfeld sind Systeme zur Übertragung/Anpassung von hohen HF-Leistungen wie sie z.B. bei der Anregung von Plasma erforderlich sind. Hier kommen die Materialien vor allem in steuerbaren Kondensatoren (Varaktoren) in steuerbaren Anpassnetzwerken zum Einsatz, um die Impedanz des Plasmas an die des Generators adaptiv anzupassen. In den genannten kommerziellen Anwendungen müssen die verwendeten Materialien zusätzlich kostengünstig, d.h. preislich konkurrenzfähig gegenüber Halbleiterbauteilen sein.

Die Qualitäts- und Preisanforderungen an dielektrische Hochfrequenzmaterialien sind hoch. Zusätzlich sind die Flexibilitäts- und Mobilitätsanforderungen an die Kommunikations-Sensorsysteme im Steigen begriffen. Daraus resultiert ein Bedarf an preisgünstigen und dynamisch rekonfigurierbaren Hochfrequenz- bzw. Mikrowellenmodulen. Die Nachfrage nach solchen steuerbaren Mikrowellenbauteilen wird in den nächsten Jahren zunehmen.

Voraussetzung dafür ist allerdings die Bereitstellung von kostengünstigen, steuerbaren Bauteilen, die wiederum direkt von der Qualität und Verfügbarkeit der dazu nötigen steuerbaren, dielektrischen Materialien abhängt. Mögliche Materialien hierfür sind die dielektrischen Funktionskeramiken. Insbesondere ferroelektrische Oxidkeramiken sind für diese Anwendungen geeignet. Sie zeigen eine nichtlineare Abhängigkeit der Permittivität (Dielektrizitätszahl) von der elektrischen Feldstärke, was als Steuerbarkeit bezeichnet wird. Dieser Effekt lässt sich bei ihnen nahezu leistungslos mit sehr geringen Ansprechzeiten und unter gleichzeitiger Übertragung hoher Hochfrequenzleistungen hervorrufen. Darüber hinaus bieten keramische Schichten die Möglichkeit planarer Systemintegration, um den Platzanforderungen der Mikroelektronik zu genügen. Im Gegensatz hierzu haben sich Phasenschieber auf der Basis von Spulen mit Ferritkernen und auf Basis von PIN-Dioden wegen nicht ausreichend schneller Ansprechzeiten und zu hohen dielektrischen Verlusten sowie fehlender planarer Integrierbarkeit nicht durchsetzen können. Die gute planare Integrierbarkeit wird möglich durch Nutzung der planaren Formgebungsverfahren für Dünn- und Dickschichten, wie etwa chemische Abscheidungsmethoden (chemical solution deposition (CSD), chemical vapour deposition (CVD)) und physikalische Gasabscheidungsmethoden (physical vapour deposition (PVD)) für die Dünnschichtherstellung sowie keramischer Siebdruck für die Dickschichtherstellung. Weitere Herstellungsmethoden sind das Pressen und Sintern von Scheiben des Materials oder keramisches Foliengießen oder die keramische Multilagentechnik, um in Anschluss einfache, geschichtete (Multilayer Ceramic Capacitors, MLCC), oder kaskadierte Scheibenkondensatoren realisieren zu können. Dadurch wird die Integration von Scheibenkondensatoren, die über den kostengünstigen Prozess des Pressens hergestellt werden, möglich.

Unter den ferroelektrischen Oxidkeramiken wurden unter anderen bereits die Mischoxidsysteme Barium-Strontium-Titanat ($Ba_{1-x}Sr_xTiO_3$, BST), Barium-Strontium-Zirkonat-Titanat ($Ba_{1-x}Sr_xZr_yTi_{1-y}O_3$, BZT) und das System Silber-Tantalat-Niobat ($AgTa_xNb_{1-x}O_3$, ATN) auf ihre grundsätzliche Eignung als steuerbare Dielektrika hin getestet. Dabei stellte sich das System BST als das am erfolgversprechendste heraus. Diese ferroelektrischen Materialien werden bei Temperaturen oberhalb des Curie-Punkts im paraelektrischen Zustand angewandt, also als paraelektrische Materialien.

Ebenfalls bekannt sind Kompositmaterialien, die eine Mischung aus dielektrischen und paraelektrischen Materialien, wie beispielsweise aus den zuvor genannten Materialien, umfassen. Bei der Herstellung solcher Komposite werden die Pulver gemischt und weiterverarbeitet, so dass das Gefüge der gesinterten Komposit-Keramiken aus statistisch verteilten Körner der mindestens zwei Phasen besteht. Typische dielektrische Materialien, die in solchen Kompositen bereits eingesetzt wurden, sind z.B. $Al_2O_3$, MgO, $Mg_2TiO_4$, $Mg_2SiO_4$, $Mg_2B_2O_5$, $Mg_3B_2O_6$, $B_2O_3$, $BaCu(B_2O_5)$ oder $BaWO_4$. Ebenfalls beschrieben ist die Herstellung von Core-Shell-Partikel, bei denen die einzelnen dielektrischen Pulverpartikel mit dem ferroelektrischen Material beschichtet wird, wobei nach dem Sintern wieder homogene Komposit-Keramiken mit statistisch verteilten Körner von mindestens zwei Phasen entstehen, wie in R. Berthelot et al., "From core-shell BaTiO3@MgO to nanostructured low dielectric loss ceramics by spark plasma sintering", J. Mater. Chem. C, 2014, 2, 683-690 beschrieben ist. Die dielektrischen Verluste beschränken die Verwendung hochsteuerbarer Werkstoffe, da sie bei der Nutzung viel Energie als Abwärme abgeben und somit zum einen inhärent energieineffizienter sind und zum anderen elaborierte Kühlsysteme benötigen. Herkömmlicherweise führt bei einem Kompositmaterial die Zugabe von dielektrischen Materialien zu geringeren dielektrischen Verlusten bei möglicher Beibehaltung der elektrischen Steuerbarkeit. Es gilt immer einen Kompromiss zwischen möglichst hoher Steuerbarkeit und möglichst geringen dielektrischen Verlusten zu finden. Zur Beurteilung des Verhältnisses dieser beiden Eigenschaften gibt es die Materialgüte und den "Commutation Quality Factor" (CQF).

Aufgabe der Erfindung

Es wäre daher wünschenswert, ein Kompositmaterial und ein Verfahren zum Herstellen eines Kompositmaterials bereitzustellen, welche die Nachteile bekannter Kompositmaterialien zumindest weitgehend vermeiden. Insbesondere soll das Kompositmaterial eine signifikante Verbesserung der Steuerbarkeit bei möglichst gleichbleibenden dielektrischen Verlust aufweisen.

Allgemeine Beschreibung der Erfindung

Diese Aufgabe wird adressiert durch ein Kompositmaterial, ein Verfahren zum Herstellen eines Kompositmaterials und ein Kondensator mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf, "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein Kompositmaterial vorgeschlagen. Das Kompositmaterial umfasst mindestens ein dielektrisches Material und mindestens ein paraelektrisches Material. Das dielektrische Material ist zumindest teilweise als Cluster ausgebildet. Das paraelektrische Material ist perkoliert.

Durch die vorgestellte Strukturierung in Form der gebildeten Cluster des dielektrischen Materials und des perkolierten paraelektrischen Materials erfolgt eine signifikante Verbesserung der Steuerbarkeit des Kompositmaterials bei minimaler Verringerung des dielektrischen Verlusts. Dies führt zu verbessertem Verhalten des Werkstoffes, so dass für einen gewünschten Steuerbarkeitswert ein geringerer Energieverlust und weniger Gegenkühlung hingenommen werden muss.

Das dielektrischen Material kann als Cluster mit einer mittleren Querschnittsfläche $d_{2,50}$ von 20 $\mu m^2$ bis 0,2 $mm^2$, bevorzugt von 30 $\mu m^2$ bis 0,02 $mm^2$ und besonders bevorzugt von 30 $\mu m^2$ bis 0,005 $mm^2$ ausgebildet sein.

Die mittlere Querschnittsfläche $d_{2,50}$ der Cluster des dielektrischen Material kann mit steigendem Anteil an dielektrischem Material zunehmen. Mit anderen Worten kann die mittlere Querschnittsfläche der Cluster des dielektrischen Material umso größer sein, desto höher der Anteil an dielektrischem Material ist. Dies sorgt für eine besonders vorteilhafte Strukturierung.

Bei einem Anteil des dielektrischen Materials bis 65 vol.-% kann dieses als Cluster mit einer mittleren Querschnittsfläche $d_{2,50}$ von 20 $\mu m^2$ bis 0,02 $mm^2$ ausgebildet sein. Bei einem Anteil des dielektrischen Materials von mehr als 65 vol.-% kann dieses als Cluster mit einer mittleren Querschnittsfläche $d_{2,50}$ von 30 $\mu m^2$ bis 0,2 $mm^2$ ausgebildet sein.

Das dielektrische Material kann mindestens ein dotiertes oder undotiertes Material sein ausgewählt aus der Gruppe bestehend aus $Al_2O_3$, $MgO$, $Mg_2TiO_4$, $Mg_2SiO_4$, $Mg_2B_2O_5$, $Mg_3B_2O_6$, $B_2O_3$, $BaCu(B_2O_5)$, $BaWO_4$. Das paraelektrische Material kann mindestens ein dotiertes oder undotiertes Material sein ausgewählt aus der Gruppe bestehend aus $Ba_{1-x}Sr_xTiO_3$ mit x = 0 bis 0,5, $BaZr_xTi_{1-x}O_3$ mit x = 0 bis 0,3, bevorzugt mit x > 0 bis 0,3, wie beispielsweise mit x = 0,01 bis 0,3, und $AgTa_xNb_{1-x}O_3$ mit x = 0 bis 0,2. Derartige Materialien eignen sich besonders gut als steuerbare Materialien.

Das dielektrische Material kann $Mg_3B_2O_6$ sein und das paraelektrische Material kann dotiertes oder undotiertes $Ba_{1-x}Sr_xTiO_3$ mit x = 0 bis 0,5 sein. Diese Materialmischung stellt eine besonders vorteilhafte Materialkombination hinsichtlich der Steuerbarkeit bei gleichzeitiger Verringerung des dielektrischen Verlustes dar. Je nach Anwendungstemperatur kann sich x ändern und ist zudem abhängig, ob das Materials dotiert wird. Die Dotierung ist dabei optional. Eine Dotierung bewirkt weiterhin eine Curie-Punktverschiebung.

Das Kompositmaterial kann gepresst und gesintert sein. Entsprechend kann das Kompositmaterial mit gängigen Methoden zu Vollkeramiken verpresst und gesintert sein. Die Formgebung kann auch mittels Siebdruck entsprechender Pasten erfolgen.

Das Kompositmaterial kann anhand seines Materialgütefaktor (MQF) bzw. bezüglich seines Commutation Quality Factor (CQF) bewertet werden. Wichtig ist hierbei immer die Betrachtung von Steuerbarkeit in Bezug auf die erreichbaren Materialverluste. Unterschieden wird hierbei teilweise welche Bezugsgröße für die Materialverluste herangezogen werden. Die Verwendung der maximalen Verluste tan $\delta_{max}$ = max tan $\delta(E_B)$ innerhalb der Schranken $|E_B| \leq E_{B,max}$ ist pessimistischer als die Verwendung der Verluste tan $\delta(E_B)$ zur jeweils angelegten Steuerfeldstärke $E_B$. Beim Vergleich ist daher neben der Frequenzabhängigkeit auch die maximale Steuerfeldstärke $E_{B,max}$ heranzuziehen. Die Steuerfeldstärke ergibt sich aus dem Quotienten aus Steuerspannung und Dicke des Paraelektrikums bzw. Abstand der Elektroden.

Im Allgemeinen ist festzustellen, dass die Steuerbarkeit des vorgeschlagenen strukturierten Kompositmaterials deutlich weniger zurückgeht als für eine reine unstrukturierte Mischung der Materialien wie in CAD-assisted modeling of high dielectric contrast composite materials, Journal of the European Ceramic Society Volume 37, Issue 4, April 2017, Pages 1487-1494 gezeigt. Dabei ist der Verlust des Materials deutlich geringer als bei reinen Paraelektrika. Hieraus ergibt sich ein erhöhter Materialgütefaktor bzw. ein erhöhter Commutation Quality Factor gegenüber konventionellen Paraelektrika und Kompositen.

Das Kompositmaterial kann eine Materialgüte von mindestens 30 und bevorzugt mindestens 35 aufweisen. Der Commutation Quality Factor ist mindestens 1000 bevorzugt mindestens 1500 bei der angelegten Steuerfeldstärke von 1,57 kV/mm für das strukturierte Kompositmaterial.

In einem weiteren Aspekt der vorliegenden Erfindung wird ein Verfahren zum Herstellen eines Kompositmaterials vorgeschlagen. Das Verfahren umfasst die folgenden Schritte, bevorzugt in der angegebenen Reihenfolge:

- Bereitstellen eines dielektrischen Materials,

- Bereitstellen eines paraelektrischen Materials,

- Ausbilden des dielektrischen Materials zumindest teilweise als Cluster,

- zumindest teilweises Beschichten der Cluster mit dem paraelektrischen Material,

- Formgebung des dielektrischen Materials und des paraelektrischen Materials nach dem Beschichten der Cluster zu einem Kompositmaterialrohling und

- zumindest teilweises Sintern des formgegebenen Kompositmaterialrohlings zu einem zumindest teilweise dichten keramischen Kompositmaterial, wobei das paraelektrische Material perkoliert ist.

Durch das Verfahren lässt sich eine Strukturierung des Kompositmaterials realisieren. Die vorgestellte Strukturierung in Form der gebildeten Cluster des dielektrischen Materials und des perkolierten paraelektrischen Materials erfolgt eine signifikante Verbesserung der Steuerbarkeit des Kompositmaterials bei minimaler Verringerung des dielektrischen Verlusts. Dies führt zu verbessertem Verhalten des Werkstoffes, so dass für einen gewünschten Steuerbarkeitswert ein geringerer Energieverlust und weniger Gegenkühlung hingenommen werden muss.

Das Verfahren kann weiterhin Pressen und/oder vollständiges Sintern des Kompositmaterialrohlings umfassen. So kommt es durch die Beschichtung der Cluster mit dem paraelektrischen Material zur Bildung von sogenannten Core-Shell-Granulaten. Diese können nach gängigen Methoden zu Vollkeramiken verpresst und gesintert werden.

Das dielektrische Material kann als ein erstes Pulver bereitgestellt werden. Das paraelektrische Material kann als Precursor, Sol oder amorphe Beschichtung bereitgestellt werden. Entsprechend können die Granulate auf verschiedene Weisen beschichtet werden.

Das dielektrische Material kann als ein erstes Pulver bereitgestellt werden. Das paraelektrische Material kann als ein zweites Pulver bereitgestellt werden. Entsprechend kann auch eine Beschichtung der Cluster mittels eines Pulvers erfolgen.

Das Verfahren kann weiterhin Zerkleinern, insbesondere Mahlen, des dielektrischen Materials und/oder des paraelektrischen Materials umfassen. Damit kann eine vollständige und möglichst gleichmäßige Granulierung des dielektrischen Materials ermöglicht werden. Hierfür ist es vorteilhaft, die vergleichsweise großen Partikel nach der Kalzinierung des Materials durch eine Mahlung zu reduzieren.

Das erste Pulver kann eine Partikelgrößenverteilung mit einem Durchmesser $d_{50}$ von 0,02 $\mu$m bis 0,5 $\mu$m und bevorzugt 0,05 $\mu$m bis 0,2 $\mu$m aufweisen. Das zweite Pulver kann eine Partikelgrößenverteilung mit einem Durchmesser $d_{50}$ von 0,05 $\mu$m bis 0,5 $\mu$m und bevorzugt 0,08 $\mu$m bis 0,2 $\mu$m aufweisen. Damit werden besonders vorteilhafte Core-Shell-Granulate gebildet.

Das Verfahren kann weiterhin Granulieren des dielektrischen Materials umfassen. Damit kann eine vollständige und möglichst gleichmäßige Granulierung des dielektrischen Materials für die darauffolgende Beschichtung mit dem paraelektrischen Material erreicht werden.

Das Verfahren kann weiterhin Granulieren des dielektrischen Materials umfassen. Dabei weist das dielektrische Material eine Granulatgröße von 5 $\mu$m bis 500 $\mu$m und bevorzugt von 10 $\mu$m bis 200 $\mu$m und besonders bevorzugt von 10 bis 100 $\mu$m auf. Damit können die dielektrischen Cluster gleichmäßig mit dem paraelektrischen Material beschichtet werden.

Das Verfahren kann weiterhin Dispergieren des paraelektrischen Materials und des dielektrischen Materials umfassen. Damit kann eine vollständige und möglichst gleichmäßige Vermischung der dielektrischen Granulate und des paraelektrischen Pulvers in einem Lösemittel realisiert werden, um eine gleichmäßige Beschichtung im nachfolgenden Beschichtungsprozess sicherzustellen.

Das Verfahren kann weiterhin gemeinsames Granulieren des paraelektrischen Materials und des dielektrischen Materials umfassen. Damit kann eine vollständige und möglichst gleichmäßige Granulierung des dielektrischen Materials ermöglicht werden. Hierfür ist es vorteilhaft, die vergleichsweise großen Partikel nach der Kalzinierung des Materials durch eine Mahlung zu reduzieren.

Das dielektrische Material kann als Cluster mit einer mittleren Querschnittsfläche $d_{2,50}$ von 20 $\mu$m$^2$ bis 0,2 mm$^2$, bevorzugt von 30 $\mu$m$^2$ bis 0,02 mm$^2$ und besonders bevorzugt von 30 $\mu$m$^2$ bis 0,005 mm$^2$ ausgebildet werden.

Die mittlere Querschnittsfläche $d_{2,50}$ der Cluster des dielektrischen Material kann mit steigendem Anteil an dielektrischem Material zunehmen. Mit anderen Worten kann die mittlere Querschnittsfläche der Cluster des dielektrischen Material umso größer sein, desto höher der Anteil an dielektrischem Material ist. Dies sorgt für eine besonders vorteilhafte Strukturierung.

Bei einem Anteil des dielektrischen Materials bis 65 vol.-% kann dieses als Cluster mit einer mittleren Querschnittsfläche $d_{2,50}$ von 20 $\mu m^2$ bis 0,02 $mm^2$ ausgebildet werden. Bei einem Anteil des dielektrischen Materials von mehr als 65 vol.-% kann dieses als Cluster mit einer mittleren Querschnittsfläche $d_{2,50}$ von 30 $\mu m^2$ bis 0,2 $mm^2$ ausgebildet werden.

Das dielektrische Material kann mindestens ein Material sein ausgewählt aus der Gruppe bestehend aus $Al_2O_3$, MgO, $Mg_2TiO_4$, $Mg_2SiO_4$, $Mg_2B_2O_5$, $Mg_3B_2O_6$, $B_2O_3$, $BaCu(B_2O_5)$, $BaWO_4$. Das paraelektrische Material kann mindestens ein dotiertes oder undotiertes Material sein ausgewählt aus der Gruppe bestehend aus $Ba_{1-x}Sr_xTiO_3$ mit x = 0 bis 0,5, $BaZr_xTi_{1-x}O_3$ mit x = 0 bis 0,3, bevorzugt mit x > 0 bis 0,3, wie beispielsweise mit x = 0,01 bis 0,3, und $AgTa_xNb_{1-x}O_3$ mit x = 0 bis 0,2. Derartige Materialien eignen sich besonders gut, um die Steuerbarkeit bei gleichzeitiger Verringerung des dielektrischen Verlustes zu realisieren.

Das dielektrische Material kann $Mg_3B_2O_6$ sein und das paraelektrische Material kann dotiertes oder undotiertes $Ba_{1-x}Sr_xTiO_3$ mit x = 0 bis 0,5 sein. Diese Materialmischung stellt eine besonders vorteilhafte Materialkombination hinsichtlich der Steuerbarkeit bei gleichzeitiger Verringerung des dielektrischen Verlustes dar.

Das Sintern kann Feld-Aktiviertes Sintern umfassen. Falls das angepeilte Gefüge aufgrund der beim Sintern auftretenden Kornvergröberung nicht erreicht werden kann, ist es möglich durch alternative Sinterverfahren das Kornwachstum zu kontrollieren. Ein solches Verfahren kann beispielsweise die field-assisted sintering technique, auch genannt spark plasma sintering (FAST/SPS) sein, bei der durch elektrisches Heizen einer Graphitmatrize eine Verdichtung mit sehr hohen Heizraten unter Druck möglich ist. Aufgrund der kurzen Prozesszeiten kommt es hierbei zu einer Verdichtung der Probe mit minimalem Kornwachstum. Die resultierenden Körner des Paraelektrikums genügen zwar nicht den Anforderungen für optimale dielektrische Eigenschaften (vergleiche Abschnitt 4.4), durch einen weiteren konventionellen Sinterschritt kann jedoch die normale Korngröße erreicht werden, ohne die Struktur der Probe weiter zu verändern.

In einem weiteren Aspekt der vorliegenden Erfindung wird ein Kondensator vorgeschlagen. Der Kondensator umfasst zwei Elektroden und ein Dielektrikum. Das Dielektrikum ist zwischen den Elektroden angeordnet, insbesondere eingebettet. Das Dielektrikum ist aus einem Kompositmaterial nach einer der vorstehenden oder nachstehend beschriebenen Ausführungsformen hergestellt.

In einem weiteren Aspekt der vorliegenden Erfindung wird ein Interdigitalkondensator vorgeschlagen. Der Kondensator umfasst zwei Elektroden und ein Substrat. Die Elektroden sind auf dem Substrat angeordnet. Das Substrat ist aus einem Kompositmaterial nach einer der vorstehenden oder nachstehend beschriebenen Ausführungsformen hergestellt.

Eine Kapazität des Kondensators kann mittels einer Steuerspannung variabel sein.

Der Kondensator kann für ein Hochfrequenzbauteil oder Hochfrequenzsystem ausgebildet sein.

Ein Frequenzbereich des Hochfrequenzbauteils oder Hochfrequenzsystems kann von 10 MHz bis 100 GHz und bevorzugt von 10 MHz bis 10 GHz sein.

Der Begriff "Kompositmaterial", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Werkstoff aus zwei oder mehr verbundenen Materialien beziehen, der andere Werkstoffeigenschaften besitzt als seine einzelnen Komponenten. Insbesondere kann es sich bei einem Kompositmaterial um ein keramisches Material handeln, das zumindest teilweise gesintert ist.

Der Begriff "Keramik" und seine Äquivalente, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vielzahl anorganischer nichtmetallischer Werkstoffe beziehen.

Der Begriff "dielektrisches Material", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine elektrisch schwach- oder nichtleitende Substanz beziehen, in der die vorhandenen Ladungsträger nicht frei beweglich sind. Ein dielektrisches Material kann grundsätzlich ein Gas, eine Flüssigkeit oder ein Feststoff sein. Im Rahmen der vorliegenden Erfindung kann es sich dabei insbesondere um keramisches Material handeln. Der Begriff Dielektrikum wird insbesondere dann verwendet, wenn in dem betrachteten Raumbereich ein elektrisches Feld besteht. Die Feldgrößen des Dielektrikums sind die elektrische Feldstärke und die elektrische Flussdichte. Da in einem Dielektrikum die Ladungsträger nicht frei beweglich sind, werden sie durch ein äußeres elektrisches Feld polarisiert. Dabei wird zwischen zwei Arten der Polarisation unterschieden. Bei der Verschiebungspolarisation werden elektrische Dipole induziert, das heißt, Dipole entstehen durch geringe Ladungsverschiebung in den Atomen oder Molekülen oder zwischen verschieden geladenen Ionen. Bei einem Wechselfeld "schwingen" die negative Elektronenhülle und der positive Atomkern gegenläufig hin und her. Die Bewegung des Atomkerns kann auf Grund seiner deutlich größeren Masse (Massenverhältnis Proton zu Elektron $\approx$ 1836) gegenüber der Elektronenhüllenbewegung vernachlässigt werden. Daher wird der Atomkern als ortsfest betrachtet. Die Größe des induzierten Dipolmoments ist somit nur von der Auslenkung der Elektronenhülle abhängig. Bei diesen Schwingungen entsteht keine Wärmeenergie. Der Effekt kann mit Hilfe der Clausius-Mossotti-Gleichung beschrieben werden. Bei der Orientierungspolarisation werden ungeordnete, permanente Dipole eines Isolators im elektrischen Feld gegen ihre thermische Bewegung ausgerichtet. Bei einem Wechselfeld müssen sich die Moleküle ständig umorientieren, wobei Energie aus dem Feld in Wärme umgesetzt wird (Mikrowellenherd). Der Effekt kann mit der Debye-Gleichung beschrieben werden. Die Permittivität, auch dielektrische Leitfähigkeit oder dielektrische Funktion genannt, gibt in der Elektrodynamik und auch in der Elektrostatik die Polarisationsfähigkeit eines Materials durch elektrische Felder an. Auch dem Vakuum ist eine Permittivität zugewiesen, da sich auch im Vakuum elektrische Felder einstellen oder elektromagnetische Felder ausbreiten können. Es handelt sich um eine Naturkonstante, nämlich die elektrische Feldkonstante. Die Permittivität eines Stoffes wird dann als Vielfaches der Permittivität des Vakuums angegeben. Im Rahmen der vorliegenden Erfindung kann das dielektrische Material insbesondere auch als NDK-Material bezeichnet werden, d.h. ein Material mit niedriger Dielektrizitätskonstante. Dabei ist die Permittivität mit 10 bis 200 nicht allzu hoch. Die Isolationswiderstandswerte sind mit $10^{10}$ bis $10^{12}$ $\Omega$ sehr hoch.

Der Begriff "paraelektrisches Material", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein nichtleitendes Material beziehen, das keine parallel ausgerichteten permanenten elektrischen Dipolmomente aufweist. Der Begriff wird vor allem für Stoffe verwendet, die bei niedrigerer Temperatur ferroelektrisch sind (also für Ferroelektrika oberhalb ihrer Curie-Temperatur) oder durch kleine Modifikationen beispielsweise der chemischen Zusammensetzung zu einem Ferroelektrikum werden. Der Begriff steht daher im direkten Gegensatz zum Begriff des Ferroelektrikums, in Analogie zum Begriffspaar paramagnetisch/ferromagnetisch. Paraelektrika (im engeren Sinne) stehen schon nahe an der Ausbildung einer elektrischen Polarisation und zeichnen sich daher durch eine hohe Permittivität aus. Es kommt in ihnen auch zu nichtlinearen Effekten. Die Permittivität ist von der elektrischen Feldstärke und vom mechanischen Druck abhängig. Dieser Effekt kann in der Hochfrequenztechnik ausgenutzt werden: Indem die Permittivität über eine angelegte Gleichspannung verändert wird, kann eine steuerbare Phasenverschiebung eines Hochfrequenz-(Mikrowellen-) Signals erzielt werden, und es können durchstimmbare Filter hergestellt werden. Im Rahmen der vorliegenden Erfindung kann das paraelektrische Material insbesondere auch als HDK-Material bezeichnet werden, d.h. ein Material mit hoher Dielektrizitätskonstante. Dabei ist die Permittivität mit bis zu 10000 hoch. Die Isolationswiderstandswerte liegen durchschnittlich bei $10^7$ bis $10^{10}$ $\Omega$.

Der Begriff "Cluster", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Ansammlung oder Gruppierung beliebiger Objekte in einem beliebigen Phasenraum beziehen. Der Begriff steht daher im direkten Gegensatz zum Vorliegen von Einzelobjekten. Im Rahmen der vorliegenden Erfindung bezieht sich der Begriff vor allem auf Ausbildung zusammenhängender Gebiete von Materialpartikeln der gleichen chemischen Zusammensetzung.

Der Begriff "Perkolation" und seine Äquivalente, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf die vollständige Durchdringung des vorliegenden Objekts durch ein zusammenhängendes Gebiet beziehen. Es kann somit ein Pfad von dem einen Ende der Struktur bis zu dem anderen Ende der Struktur (d.h. zwischen den zwei Elektroden) gefunden werden, welcher die perkolierende Spezies (in der vorliegenden Erfindung vor allem "Material der gleichen chemischen Zusammensetzung") nicht verlässt.

Der Begriff "Steuerbarkeit" ($\tau(E)$), wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf das Verhältnis von Permittivitätsänderung im ausgesteuerten Zustand (mit E-Feld) zu Permittivität im nicht gesteuerten Zustand (ohne E-Feld) beziehen. Insbesondere ferroelektrische Oxidkeramiken zeigen eine nichtlineare Abhängigkeit der Permittivität (Dielektrizitätszahl) von der elektrischen Feldstärke, was als Steuerbarkeit bezeichnet wird. Dieser Effekt lässt sich bei ihnen nahezu leistungslos mit sehr geringen Ansprechzeiten und unter gleichzeitiger Übertragung hoher Hochfrequenzleistungen hervorrufen.

Der Begriff "Materialgüte" (MQF), wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf den Materialqualitätsfaktor beziehen. Der Materialqualitätsfaktor geht aus dem Quotient von Steuerbarkeit für eine bestimmte Feldstärke und ungesteuerten dielektrischen Verlusten ($\tan\delta(0)$) hervor und ist somit ein Maß für die Performanz des Materials im ungesteuerten Zustand:

$$MQF(E) = \frac{\tau(E)}{\tan \delta(0)}$$

Der Begriff "Commutation Quality Factor" (CQF), wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Maß für die Materialgüte unter Last beziehen:

$$CQF(E) = \frac{\tau^2(E)}{(1 - \tau(E)) \cdot \tan \delta(0) \cdot \tan \delta(E)}$$

Der Begriff "Präkursor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere bei einem Syntheseweg auf Verbindungen beziehen, die als Ausgangsprodukt in eine Reaktion eingeht. Aus diesem wird, manchmal unter Beteiligung weiterer Präkursoren, ein oft komplexes und differenziertes Produkt gebildet. Insbesondere kann es sich dabei um einen Ausgangsstoff für weitere Syntheseschritte handeln.

Der Begriff "Sol", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine kolloidale Dispersion beziehen. Ein Sol wird insbesondere im Rahmen eines Sol-Gel-Prozesses verwendet. Der Sol-Gel-Prozess ist ein Verfahren zur Herstellung nichtmetallischer anorganischer oder hybridpolymerer Materialien aus kolloidalen Dispersionen, den sogenannten Solen. Die Ausgangsmaterialien werden auch als Präkursoren bezeichnet. Aus ihnen entstehen in Lösung in ersten Grundreaktionen feinste Teilchen. Durch eine spezielle Weiterverarbeitung der Sole lassen sich Pulver, Fasern, Schichten oder Aerogele erzeugen. Wegen der geringen Größe der zunächst erzeugten Solpartikel im Nanometerbereich lässt sich der Sol-Gel-Prozess als Teil der chemischen Nanotechnologie verstehen.

Der Begriff "amorphe Beschichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Beschichtung mit einem amorphen Material beziehen. Als amorphes Material bezeichnet man in der Physik und der Chemie einen Stoff, bei dem die Atome keine geordneten Strukturen, sondern ein unregelmäßiges Muster bilden und lediglich über Nahordnung, nicht aber Fernordnung verfügen. Fernordnungen, also eine regelmäßige Anordnung der Atome über ihre Nachbaratome hinaus, sind charakteristisch für Kristalle. Regelmäßig strukturierte Materialien werden Kristalle genannt.

Der Begriff "Sintern ", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Verfahren zur Herstellung oder Veränderung von Werkstoffen beziehen. Dabei werden feinkörnige keramische oder metallische Stoffe erhitzt, wobei die Temperaturen jedoch unterhalb der Schmelztemperatur der Hauptkomponenten bleiben, so dass die Gestalt (Form) des Werkstückes erhalten bleibt. Dabei kommt es in der Regel zu einer Schwindung, weil sich die Partikel des Ausgangsmaterials verdichten und Porenräume aufgefüllt werden. Man unterscheidet grundsätzlich das Festphasensintern und das Flüssigphasensintern, bei dem es auch zu einer Schmelze kommt. Sinterprozesse besitzen große Bedeutung bei der Keramikherstellung und in der Metallurgie ("Sintermetalle" und "Pulvermetallurgie"). Durch die Temperaturbehandlung des Sinterns wird aus einem fein- oder grobkörnigen Grünkörper, der in einem vorangegangenen Prozessschritt - beispielsweise mittels Sintern - geformt wurde, ein festes Werkstück. Das Sintererzeugnis erhält erst durch die Temperaturbehandlung seine endgültigen Eigenschaften, wie Härte, Festigkeit oder Temperaturleitfähigkeit, die im jeweiligen Einsatz erforderlich sind. Die Schmelztemperatur der Sinterwerkstoffe liegt in der Regel oberhalb von 1000 Grad Celsius.

Der Begriff "Feld-Aktiviertes Sintern", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein mit Heißpressen vergleichbares Sinterverfahren beziehen. Dabei wird das Pulver in einen Graphittiegel gefüllt, der die Form eines Hohlzylinders hat. Über zwei Graphitstempel, die in den Hohlzylinder eingepasst sind, wird das Pulver zunächst manuell vorverdichtet. Anschließend wird der Tiegel mit den Stempeln in die SPS-Maschine eingebaut. Dort kann unter Schutzgas oder Vakuum der eigentliche Sintervorgang erfolgen. Über eine hydraulische Presse wird zunächst ein definierter Druck auf das Material ausgeübt, in der Regel im Bereich von einigen Megapascal. Dieser Druck wird während des gesamten Sinterverfahrens aufrechterhalten. Das Sintern erfolgt im Wesentlichen durch Strom. Hierzu wird ein Gleichstrom verwendet, mit Stromstärken im Bereich von einigen Kiloampere und Spannungen von einigen Volt. Das Charakteristische an diesem Verfahren ist, dass der Gleichstrom direkt durch den Graphittiegel geleitet wird. Durch den Ohm'schen Widerstand des Graphittiegels wird die elektrische Leistung des Stroms in Wärmeleistung umgesetzt, wodurch das Pulver aufgeheizt wird. Der Vorteil in diesem Verfahren liegt darin, dass die mögliche Heiz- bzw. Kühlrampe extrem steil ist (bis zu 1000 K/min), wodurch Zieltemperaturen schnell erreicht werden können. Somit sind kurze Prozesszeiten (Bereich < 30 min) bei hoher Kompaktierung (> 90 % theoretischer Dichte) möglich, was den Vorteil von guter Verdichtung bei vergleichsweise geringem Wachstum der Körner innerhalb des Materials bietet.

Zusammenfassend werden, ohne Beschränkung weiterer möglicher Ausgestaltungen, folgende Ausführungsformen vorgeschlagen:

Ausführungsform 1: Kompositmaterial, umfassend

mindestens ein dielektrisches Material und

mindestens ein paraelektrisches Material,

wobei das dielektrische Material zumindest teilweise als Cluster ausgebildet ist und das paraelektrische Material perkoliert ist.

Ausführungsform 2: Kompositmaterial nach einer der vorhergehenden Ausführungsformen, wobei das dielektrischen Material als Cluster mit einer mittleren Querschnittsfläche $d_{2,50}$ von 20 $\mu m^2$ bis 0,2 $mm^2$, bevorzugt von 30 $\mu m^2$ bis 0,02 $mm^2$ und besonders bevorzugt von 30 $\mu m^2$bis 0,005 $mm^2$ ausgebildet ist.

Ausführungsform 3: Kompositmaterial nach dem vorhergehenden Anspruch, wobei die mittlere Querschnittsfläche $d_{2,50}$ der Cluster des dielektrischen Material mit steigendem Anteil an dielektrischem Material zunimmt.

Ausführungsform 4: Kompositmaterial nach einer der vorhergehenden Ausführungsformen, wobei bei einem Anteil des dielektrischen Materials bis 65 vol.-% dieses als Cluster mit einer mittleren Querschnittsfläche $d_{2,50}$ von 20 $\mu m^2$ bis 0,02 $mm^2$ ausgebildet sind, wobei bei einem Anteil des dielektrischen Materials von mehr als 65 vol.-% dieses als Cluster mit einer mittleren Querschnittsfläche $d_{2,50}$ von 30 $\mu m^2$ bis 0,2 $mm^2$ ausgebildet sind.

Ausführungsform 5: Kompositmaterial nach einer der vorhergehenden Ausführungsformen, wobei das dielektrische Material mindestens ein Material ist ausgewählt aus der Gruppe bestehend aus $Al_2O_3$, $MgO$, $Mg_2TiO_4$, $Mg_2SiO_4$, $Mg_2B_2O_5$, $Mg_3B_2O_6$, $B_2O_3$; $BaCu(B_2O_5)$, $BaWO_4$, wobei das paraelektrische Material mindestens ein Material ist ausgewählt aus der Gruppe bestehend aus $Ba_{1-x}Sr_xTiO_3$ mit x = 0 bis 0,5 und $BaZrxTii-x03$ mit x = 0 bis 0,3, bevorzugt mit x > 0 bis 0,3, und $AgTa_xNb_{1-x}O_3$ mit x = 0 bis 0,2.

Ausführungsform 6: Kompositmaterial nach einer der vorhergehenden Ausführungsformen, wobei das dielektrische Material $Mg_3B_2O_6$ ist und das paraelektrische Material dotiertes oder undotiertes $Ba_{1-x}Sr_xTiO_3$ mit x = 0 bis 0,5 ist.

Ausführungsform 7: Kompositmaterial nach einer der vorhergehenden Ausführungsformen, wobei das Kompositmaterial gepresst und gesintert ist.

Ausführungsform 8: Kompositmaterial nach einer der vorhergehenden Ausführungsformen, wobei das Kompositmaterial eine Materialgüte von mindestens 30 und bevorzugt mindestens 35 aufweist.

Ausführungsform 9: Kompositmaterial nach einer der vorhergehenden Ausführungsformen, wobei das Kompositmaterial einen Commutation Quality Factor von mindestens 1000 und bevorzugt mindestens 1500 bei einer angelegten elektrischen Spannung von 1,57 kV/mm aufweist.

Ausführungsform 10: Verfahren zum Herstellen eines Kompositmaterials, umfassend

- Bereitstellen eines dielektrischen Materials,

- Bereitstellen eines paraelektrischen Materials,

- Ausbilden des dielektrischen Materials zumindest teilweise als Cluster,

- zumindest teilweises Beschichten der Cluster mit dem paraelektrischen Material,

- Formgebung des dielektrischen Materials und des paraelektrischen Materials nach dem Beschichten der Cluster zu einem Kompositmaterialrohling und

- zumindest teilweises Sintern des formgegebenen Kompositmaterialrohlings zu einem zumindest teilweise dichten keramischen Kompositmaterial, wobei das paraelektrische Material perkoliert ist

Ausführungsform 11: Verfahren nach der vorhergehenden Ausführungsform, weiterhin umfassend Pressen und/oder vollständiges Sintern des Kompositmaterialrohlings.

Ausführungsform 12: Verfahren nach Ausführungsform 10 oder 11, wobei das dielektrische Material als ein erstes Pulver bereitgestellt wird, wobei das paraelektrische Material als Präkursor, Sol oder amorphe Beschichtung bereitgestellt wird.

Ausführungsform 13: Verfahren nach Ausführungsform 10 oder 11, wobei das dielektrische Material als ein erstes Pulver bereitgestellt wird, wobei das paraelektrische Material als ein zweites Pulver bereitgestellt wird.

Ausführungsform 14: Verfahren nach der vorhergehenden Ausführungsform, weiterhin umfassend Zerkleinern, insbesondere Mahlen, des dielektrischen Materials und/oder des paraelektrischen Materials.

Ausführungsform 15: Verfahren nach einer Ausführungsformen 10 bis 14, wobei das erste Pulver eine Partikelgrößenverteilung mit einem Durchmesser $d_{50}$ von 0,02 $\mu$m bis 0,5 $\mu$m und bevorzugt 0,05 $\mu$m bis 0,2 $\mu$m aufweist, wobei das zweite Pulver mit einem Durchmesser $d_{50}$ von 0,05 $\mu$m bis 0,5 $\mu$m und bevorzugt 0,08 $\mu$m bis 0,2 $\mu$m aufweist.

Ausführungsform 16: Verfahren nach einer Ausführungsformen 10 bis 15, weiterhin umfassend Granulieren des dielektrischen Materials.

Ausführungsform 17: Verfahren nach einer Ausführungsformen 10 bis 16, weiterhin umfassend Sprühgranulieren des dielektrischen Materials, wobei das dielektrische Material eine Granulatgröße von 5 $\mu$m bis 500 $\mu$m und bevorzugt von 10 $\mu$m bis 200 $\mu$m aufweist.

Ausführungsform 18: Verfahren nach einer Ausführungsformen 10 bis 17, weiterhin umfassend gemeinsames Granulieren des paraelektrischen Materials und des dielektrischen Materials.

Ausführungsform 19: Verfahren nach einer Ausführungsformen 10 oder 18, wobei das dielektrische Material als Cluster mit einer mittleren Querschnittsfläche $d_{2,50}$ von 20 $\mu$m$^2$ bis 0,2 mm$^2$, bevorzugt von 30 $\mu$m$^2$ bis 0,02 mm$^2$ und besonders bevorzugt von 30 $\mu$m$^2$ bis 0,005 mm$^2$ ausgebildet wird.

Ausführungsform 20: Verfahren nach der vorhergehenden Ausführungsform, wobei die mittlere Querschnittsfläche $d_{2,50}$ der Cluster des dielektrischen Material mit steigendem Anteil an dielektrischem Material zunimmt.

Ausführungsform 21: Verfahren nach einer Ausführungsformen 10 bis 20, wobei bei einem Anteil des dielektrischen Materials bis 65 vol.-% dieses als Cluster mit einer mittleren Querschnittsfläche $d_{2,50}$ von 20 $\mu$m$^2$ bis 0,02 mm$^2$ ausgebildet werden, wobei bei einem Anteil des dielektrischen Materials von mehr als 65 vol.-% dieses als Cluster mit einer mittleren Querschnittsfläche $d_{2,50}$ von 30 $\mu$m$^2$ bis 0,2 mm$^2$ ausgebildet werden.

Ausführungsform 22: Verfahren nach einer Ausführungsformen 10 bis 21, wobei das dielektrische Material mindestens ein Material ist ausgewählt aus der Gruppe bestehend aus $Al_2O_3$, $MgO$, $Mg_2TiO_4$, $Mg_2SiO_4$, $Mg_2B_2O_5$, $Mg_3B_2O_6$, $B_2O_3$; $BaCu(B_2O_5)$, $BaWO_4$, wobei das paraelektrische Material mindestens ein Material ist ausgewählt aus der Gruppe bestehend aus $Ba_{1-x}Sr_xTiO_3$ mit x = 0 bis 0,5 und $BaZr_xTi_{1-x}O_3$ mit x = 0 bis 0,3, bevorzugt mit x > 0 bis 0,3, und AgTaxNbi-x03 mit x = 0 bis 0,2.

Ausführungsform 23: Verfahren nach einer Ausführungsformen 10 bis 22, wobei das dielektrische Material $Mg_3B_2O_6$ ist und das paraelektrische Material dotiertes oder undotiertes $Ba_{1-x}Sr_xTiO_3$ mit x = 0 bis 0,5 ist.

Ausführungsform 24: Verfahren nach einer Ausführungsformen 10 bis 24, wobei das Sintern Feld-Aktiviertes Sintern umfasst.

Ausführungsform 25: Verfahren nach einer Ausführungsformen 10 und 12 bis 23, wobei die Formgebung mittels Siebdrucken erfolgt.

Ausführungsform 26: Kondensator, umfassend zwei Elektroden und ein Dielektrikum, wobei das Dielektrikum zwischen den Elektroden angeordnet, insbesondere eingebettet, ist, wobei das Dielektrikum aus einem Kompositmaterial nach einer Ausführungsformen 1 bis 9 besteht.

Ausführungsform 27: Interdigitalkondensator, umfassend zwei Elektroden und ein Substrat, wobei die Elektroden auf dem Substrat angeordnet sind, wobei das Substrat aus einem Kompositmaterial nach einer Ausführungsformen 1 bis 9 besteht.

Ausführungsform 28: Kondensator nach einem der beiden vorhergehenden Ansprüche, wobei eine Kapazität des Kondensators mittels einer Steuerspannung variabel ist.

Ausführungsform 29: Kondensator nach einer Ausführungsformen 26 bis 28 wobei der Kondensator für ein Hochfrequenzbauteil oder Hochfrequenzsystem ausgebildet ist.

Ausführungsform 30: Kondensator nach der vorhergehenden Ausführungsform, wobei ein Frequenzbereich des Hochfrequenzbauteils oder Hochfrequenzsystems von 10 MHz bis 100 GHz und bevorzugt von 10 MHz bis 10 GHz ist.

Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.
Im Einzelnen zeigen:

Figur 1     eine Rasterelektronenmikroskopaufnahme eines Kompositmaterials gemäß der vorliegenden Erfindung;

Figur 2     ein Verfahrensfließbild für die Herstellung von strukturierten Kompositmaterial;

Figur 3     einen Vergleich der dielektrischen Güte bei herkömmlichen Kompositmaterialien und dem erfindungsgemäßen Kompositmaterialien ohne Last;

Figur 4     einen Vergleich der dielektrischen Güte bei herkömmlichen Kompositmaterialien und dem erfindungsgemäßen Kompositmaterialien im Lastzustand;

Figur 5     einen Vergleich der Steuerbarkeit bei herkömmlichen Kompositmaterialien und dem erfindungsgemäßen Kompositmaterialien;

Figur 6     einen Vergleich der Materialgüte bei herkömmlichen Kompositmaterialien und dem erfindungsgemäßen Kompositmaterialien;

Figur 7     einen Vergleich des sogenannten Commutation Quality Factors bei herkömmlichen Kompositmaterialien und dem erfindungsgemäßen Kompositmaterialien;

Figur 8     eine Partikelgrößenverteilung eines dielektrischen Materials; und

Figur 9        eine Partikelgrößenverteilung eines paraelektrischen Materials.

Beschreibung der Ausführungsbeispiele

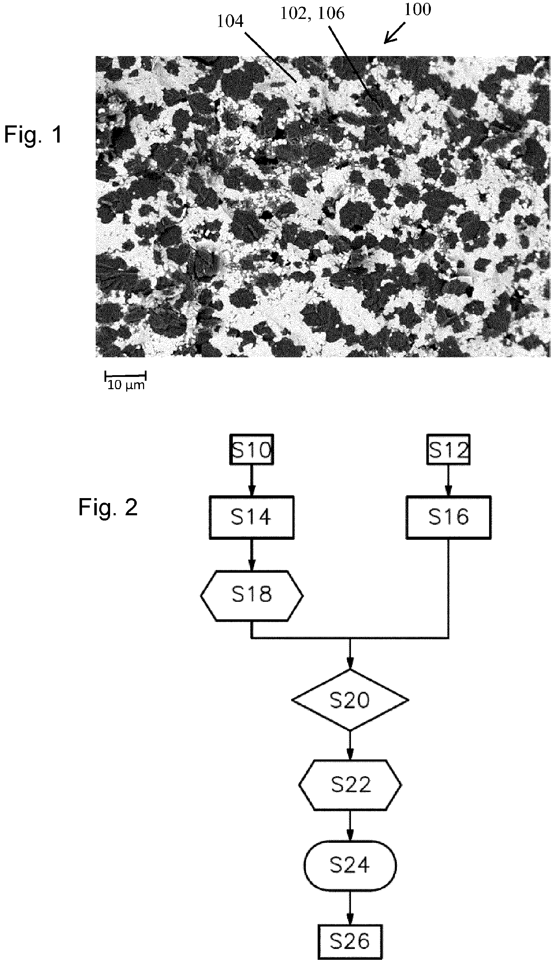

Figur 1 zeigt eine Rasterelektronenmikroskopaufnahme eines Kompositmaterials 100 gemäß der vorliegenden Erfindung. Das Kompositmaterial 100 umfasst mindestens ein dielektrisches Material 102 und mindestens ein paraelektrisches Material 104. Das dielektrische Material 102 ist mindestens ein Material ausgewählt aus der Gruppe bestehend aus $Al_2O_3$, $MgO$, $Mg_2TiO_4$, $Mg_2SiO_4$, $Mg_2B_2O_5$, $Mg_3B_2O_6$, $B_2O_3$; $BaCu(B_2O_5)$, $BaWO_4$. Bei dem gezeigten Ausführungsbeispiel ist das dielektrische Material 102 $Mg_3B_2O_6$. Das paraelektrische Material 104 ist mindestens ein dotiertes oder undotiertes Material ausgewählt aus der Gruppe bestehend aus $Ba_{1-x}Sr_xTiO_3$ mit x = 0 bis 0,5 und $BaZr_xTi_{1-x}O_3$ mit x = 0 bis 0,3, bevorzugt mit x > 0 bis 0,3, und $AgTa_xNb_{1-x}O_3$ mit x = 0 bis 0,2. Bei dem gezeigten Ausführungsbeispiel ist das paraelektrische Material 104 dotiertes oder undotiertes $Ba_{1-x}Sr_xTiO_3$ mit x = 0 bis 0,5. Im gezeigten Ausführungsbeispiel ist x = 0,4. Dabei ist der Anteil an $Mg_3B_2O_6$ 55 vol.-% und der Anteil an $Ba_{1-x}Sr_xTiO_3$ 45 vol.-%.

Figur 1 zeigt das Kompositmaterial in einem gepressten und gesinterten Zustand, wobei das $Mg_3B_2O_6$ strukturiert ist, wie nachstehend ausführlicher erläutert wird. So ist das dielektrische Material 102 zumindest teilweise als Cluster 106 ausgebildet. In Figur 1 ist das dielektrische Material 102 als dunkle Stellen oder Bereiche zu erkennen. Insbesondere ist das dielektrische Material 102 als Cluster 106 mit einer mittleren Querschnittsfläche $d_{2,50}$ von 20 $\mu m^2$ bis 0,2 $mm^2$, bevorzugt von 30 $\mu m^2$ bis 0,02 $mm^2$ und besonders bevorzugt von 30 $\mu m^2$ bis 0,005 $mm^2$ ausgebildet. Dabei kann die mittlere Querschnittsfläche $d_{2,50}$ der Cluster 106 des dielektrischen Materials 102 mit steigendem Anteil an dielektrischem Material 102 zunehmen. Beispielsweise ist bei einem Anteil des dielektrischen Materials 102 bis 65 vol.-% dieses als Cluster 106 mit einer mittleren Querschnittsfläche $d_{2,50}$ von 20 $\mu m^2$ bis 0,02 $mm^2$ ausgebildet und bei einem Anteil des dielektrischen Materials 102 von mehr als 65 vol.-% ist dieses als Cluster 106 mit einer mittleren Querschnittsfläche $d_{2,50}$ von 30 $\mu m^2$ bis 0,2 $mm^2$ ausgebildet. Wie weiter in Figur 1 zu erkennen ist, ist das paraelektrische Material 104 perkoliert. In Figur 1 ist das paraelektrische Material 104 als helle Stellen oder Bereiche zu erkennen. Die Strukturierung ist entsprechend derart realisiert, dass eine Clusterung des dielektrischen Materials 102 vorgesehen wird, wobei die Cluster die oben genannte mittlere Querschnittsfläche aufweisen. Dabei ist für höhere Dielektrikaanteile die Perkolation, also das Zusammenhängen der paraelektrischen Phase von großer Bedeutung und wird durch das Clustern der dielektrischen Phase vereinfacht, da somit auch eine Ausbildung von zu großen zusammenhängenden Dielektrikabereichen unterdrückt wird.

Das erfindungsgemäße Kompositmaterial 100 kann insbesondere in Kondensatoren verwendet werden. Beispielseise kann ein Kondensator zwei Elektroden und ein Dielektrikum umfassen. Das Dielektrikum ist zwischen den Elektroden angeordnet, insbesondere eingebettet. Das Dielektrikum ist aus einem erfindungsgemäßen Kompositmaterial 100 hergestellt. Alternativ kann der Kondensator ein Interdigitalkondensator sein, der zwei Elektroden und ein Substrat umfasst. Dabei sind die Elektroden auf dem Substrat angeordnet. Das Substrat ist aus einem erfindungsgemäßen Kompositmaterial 100 hergestellt. Bei einem solchen Kondensator kann eine Kapazität des Kondensators mittels einer Steuerspannung variabel sein. Mit anderen Worten kann der Kondensator als sogenannter Varaktor ausgebildet sein. Steuerbare Bauelemente dienen der Anpassung des Systems an unterschiedliche Umgebungen. Ein Beispiel hierfür ist die Frequenzabstimmung von Baugruppen für den Betrieb in unterschiedlichen Frequenzbändern. Diese Abstimmung kann durch steuerbare Filter erfolgen, deren Frequenzgang durch die Variation der Kapazität eines integrierten Kondensators verändert wird. Ein solcher abstimmbarer Kondensator wird im Allgemeinen als Varaktor bezeichnet. Darüber hinaus werden Varaktoren in modernen Kommunikationssystemen auch für die Abstimmung von Anpassnetzwerken und Phasenschiebern für Antennenarrays eingesetzt.

Der Kondensator kann insbesondere für ein Hochfrequenzbauteil oder Hochfrequenzsystem ausgebildet sein. Ein Frequenzbereich des Hochfrequenzbauteils oder Hochfrequenzsystems kann von 10 MHz bis 100 GHz und bevorzugt von 10 MHz bis 10 GHz sein.

Allgemein finden die keramischen Kompositmaterialien der vorliegenden Erfindung bzw. die diese enthaltenden Bauteile, wie Kondensatoren, gemäß der vorliegenden Erfindung Verwendung in der Telekommunikationsbranche, im Bereich der Hochfrequenztechnik und/oder im Bereich der Telekommunikation Ferner finden die keramischen Kompositmaterialien der vorliegenden Erfindung Verwendung im Mobilfunk, Satellitenfunk, Punkt-zu-Multipunkt Funksystemen, abstimmbaren RF-Filter und Duplexer, adaptive Anpassnetzwerke oder Phasenschieber, RF-Sensorsysteme sowie Systeme zur Übertragung/Anpassung von hohen HF-Leistungen.

Nachstehend wird ein Verfahren zum Herstellen des Kompositmaterials 100 der ersten Ausführungsform beschrieben. Figur 2 zeigt ein Ablaufdiagramm des Verfahrens. In Schritt S10 umfasst das Verfahren Bereitstellen eines dielektrischen Materials 102. Das dielektrische Material 102 wird als ein erstes Pulver bereitgestellt. Das erste Pulver weist eine Partikelgrößenverteilung mit einem Durchmesser $d_{50}$ von 0,02 $\mu m$ bis 0,5 $\mu m$ und bevorzugt 0,05 $\mu m$ bis 0,2 $\mu m$ auf.

In Schritt S12, der parallel bzw. zeitgleich zu oder vor oder nach Schritt S 10 erfolgen kann, umfasst das Verfahren Bereitstellen eines paraelektrischen Materials 104. Das paraelektrische Material 104 wird als ein zweites Pulver bereitgestellt. Das zweite Pulver weist eine Partikelgrößenverteilung mit einem Durchmesser $d_{50}$ von 0,05 μm bis 0,5 μm und bevorzugt 0,08 μm bis 0,2 μm auf.

In einem Schritt S10 nachfolgenden, optionalen Schritt S14 umfasst das Verfahren Zerkleinern, insbesondere Mahlen, des dielektrischen Materials 102. Das Ziel dieses Schrittes S14 ist es, eine vollständige und möglichst gleichmäßige Granulierung des dielektrischen Materials 102 zu ermöglichen. Hierfür ist es vorteilhaft, vergleichsweise große Partikel nach einer Kalzinierung des Materials durch eine Mahlung zu reduzieren. Entsprechend erfolgt Schritt S14, falls das erste Pulver eine größere Partikelgrößenverteilung als oben angegeben aufweist.

In einem Schritt S12 nachfolgenden, optionalen Schritt S16 umfasst das Verfahren Zerkleinern, insbesondere Mahlen, des paraelektrischen Materials. Das Ziel dieses Schrittes S16 ist es, eine ausreichende Mobilität des paraelektrischen Materials in der späteren Dispersion mit den Granulaten des dielektrischen Materials 102 zu erreichen, um eine gleichmäßige Beschichtung zu gewährleisten. Hierfür ist es vorteilhaft, vergleichsweise große Partikel nach einer Kalzinierung des Materials durch eine Mahlung zu reduzieren. Entsprechend erfolgt Schritt S16, falls das zweite Pulver eine größere Partikelgrößenverteilung als oben angegeben aufweist.

In einem Schritt S 14 nachfolgenden, optionalen Schritt S18 umfasst das Verfahren Granulieren des dielektrischen Materials 102. Das Ziel dieses Schrittes S18 ist es, eine vollständige und möglichst gleichmäßige Granulierung des dielektrischen Materials 102 für die darauffolgende Beschichtung mit dem paraelektrischen Material 104 zu erreichen. Dabei erfolgt die Bildung von Cluster 106 des dielektrischen Materials 102.

In einem Schritt S 16 und Schritt S 18 nachfolgenden Schritt S20 umfasst das Verfahren gemeinsames Dispergieren des paraelektrischen Materials 104 und des dielektrischen Materials 102. Das Ziel dieses Schrittes ist es, eine vollständige und möglichst gleichmäßige Vermischung der Granulate bzw. Cluster 106 des dielektrischen Materials 102 und des zweiten Pulvers in einem Lösemittel zu realisieren, um eine gleichmäßige Beschichtung im nachfolgenden Beschichtungsprozess sicherzustellen. Dabei erfolgt die Bildung von Cluster 106 des dielektrischen Materials 102. Das dielektrische Material 102 wird als Cluster 106 mit einer mittleren Querschnittsfläche $d_{2,5}$o von 20 μm² bis 0,2 mm² ausgebildet. Die mittlere Querschnittsfläche $d_{2,50}$ der Cluster 106 des dielektrischen Materials 102 kann mit steigendem Anteil an dielektrischem Material 102 zunehmen.

In einem Schritt S20 nachfolgenden Schritt S22 umfasst das Verfahren gemeinsames Granulieren des paraelektrischen Materials 104 und des dielektrischen Materials 102. Das Ziel dieses Schrittes S22 ist es, die Granulate des dielektrischen Materials 102 gleichmäßig mit dem zweiten Pulver bzw. dem paraelektrischen Material 104 zu beschichten.

In einem Schritt S22 nachfolgenden Schritt S24 umfasst das Verfahren Formgebung des dielektrischen Materials 102 und des paraelektrischen Materials 104 nach dem Beschichten der Cluster 106 zu einem Kompositmaterialrohling. Das Formgeben kann insbesondere Pressen des Kompositmaterialrohlings umfassen. Die Formgebung kann mittels Siebdrucken erfolgen, in dem das Kompositmaterial als Paste aufbereitet wird.

In einem Schritt S24 nachfolgenden Schritt S26 umfasst das Verfahren zumindest teilweises Sintern des formgegebenen Kompositmaterialrohlings zu einem zumindest teilweise dichten keramischen Kompositmaterial, wobei das paraelektrische Material 104 perkoliert ist. Es wird explizit betont, dass die Schritte S24 und S26 zusammengefasst werden können. Schritt S26 kann insbesondere vollständiges Sintern des Kompositmaterialrohlings umfassen. Das Sintern kann Feld-Aktiviertes Sintern umfassen.

Das Verfahren kann wie folgt modifiziert werden. Das dielektrische Material 102 kann als ein erstes Pulver bereitgestellt wird und das paraelektrische Material 104 wird als Präkursor, Sol oder amorphe Beschichtung bereitgestellt. Das Verfahren kann weiterhin Sprühgranulieren des paraelektrischen Materials 104 umfassen, wobei das paraelektrische Material 104 eine Granulatgröße von 5 μm bis 500 μm und bevorzugt von 10 μm bis 200 μm besonders bevorzugt von 10 μm bis 100 μm aufweist.

Eine Möglichkeit, die genannte Struktur zu erhalten, ist über einen zweistufigen Sprühgranulierungsprozess, bei dem durch Beschichtung von sphärischen Dielektrikum-Granulaten mit paraelektrischen Partikeln ein Core-Shell strukturiertes Pulver hergestellt wird. Dieses kann durch übliche Methoden, wie beispielsweise Pressformgebung, konventionelles Sintern, zu der gewünschten Kompositstruktur weiterverarbeitet werden.

Falls das angepeilte Gefüge aufgrund der beim Sintern auftretenden Kornvergröberung nicht erreicht werden kann, ist es möglich durch alternative Sinterverfahren das Kornwachstum zu kontrollieren. Ein solches Verfahren kann beispielsweise die field-assisted sintering technique, auch genannt spark plasma sintering (FAST/SPS) sein, bei der durch elektrisches Heizen einer Graphitmatrize eine Verdichtung mit sehr hohen Heizraten unter Druck möglich ist. Aufgrund der kurzen Prozesszeiten kommt es hierbei zu einer Verdichtung der Probe mit minimalem Kornwachstum. Die resultierenden Körner des Paraelektrikums genügen unter Umständen zwar nicht den Anforderungen für optimale dielektrische Eigenschaften, durch einen weiteren konventionellen Sinterschritt kann jedoch die normale Korngröße erreicht werden, ohne die vorteilhafte Struktur der Probe weiter zu verändern.

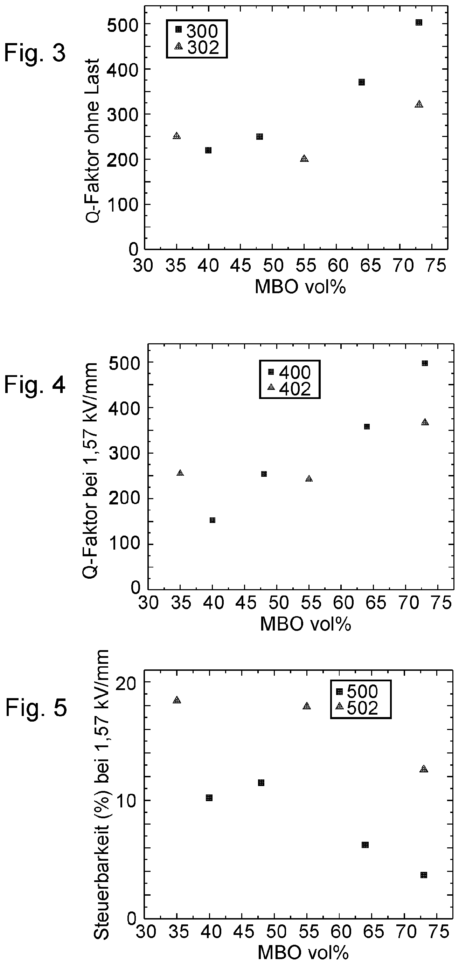

Figur 3 zeigt einen Vergleich der dielektrischen Güte bei herkömmlichen Kompositmaterialien und dem erfindungsgemäßen Kompositmaterialien mit Strukturierung in Abhängigkeit von Anteil an $Mg_3B_2O_6$ (nachfolgend MBO) ohne Last. Dabei ist der MBO-Anteil auf der X-Achse angegeben. Die dielektrische Güte, die dem Kehrwert des dielektrischen Verlusts entspricht, ist als Q-Faktor dimensionslos auf der Y-Achse angegeben. Die Punkte 300 geben beispielhaft ermittelte Werte für herkömmliche unstrukturierte Kompositmaterialien an. Die Punkte 302 geben beispielhaft ermittelte Werte für erfindungsgemäß strukturierte Kompositmaterialien an.

Figur 4 zeigt einen Vergleich der dielektrischen Güte bei herkömmlichen Kompositmaterialien und dem erfindungsgemäßen Kompositmaterialien mit Strukturierung in Abhängigkeit von Anteil an MBO im Lastzustand bei einer Steuerfeldstärke von 1,57 kV/mm. Dabei ist der MBO-Anteil auf der X-Achse angegeben. Die dielektrische Güte, die dem Kehrwert des dielektrischen Verlusts entspricht, ist als Q-Faktor dimensionslos auf der Y-Achse angegeben. Die Punkte 400 geben beispielhaft ermittelte Werte für herkömmliche unstrukturierte Kompositmaterialien an. Die Punkte 402 geben beispielhaft ermittelte Werte für erfindungsgemäß strukturierte Kompositmaterialien an.

Figur 5 zeigt einen Vergleich der Steuerbarkeit bei herkömmlichen Kompositmaterialien und dem erfindungsgemäßen Kompositmaterialien mit Strukturierung in Abhängigkeit von Anteil an MBO unter einer Steuerfeldstärke von 1,57 kV/mm. Dabei ist der MBO-Anteil auf der X-Achse angegeben. Die Steuerbarkeit ist in % auf der Y-Achse angegeben. Die Punkte 500 geben beispielhaft ermittelte Werte für herkömmliche unstrukturierte Kompositmaterialien an. Die Punkte 502 geben beispielhaft ermittelte Werte für erfindungsgemäß strukturierte Kompositmaterialien an.

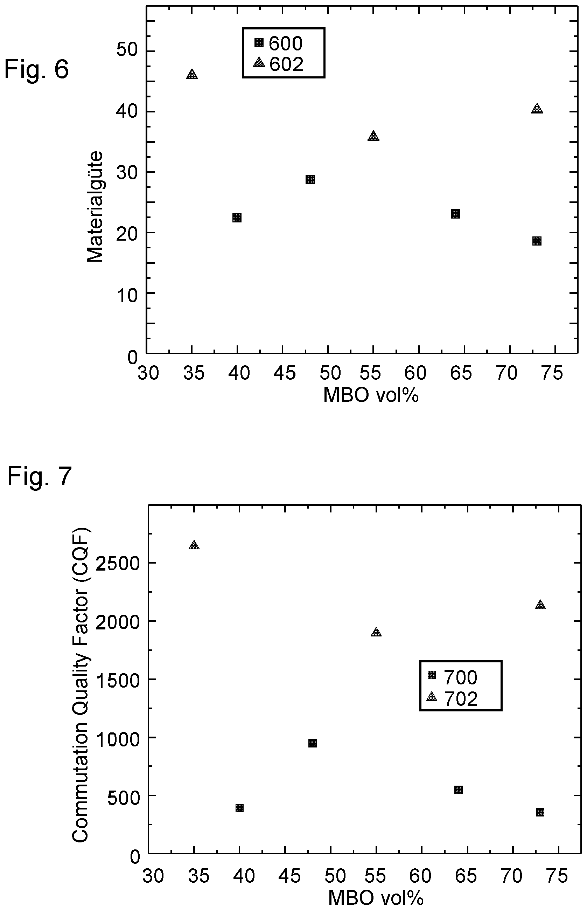

Figur 6 zeigt einen Vergleich der Materialgüte bei herkömmlichen Kompositmaterialien und dem erfindungsgemäßen Kompositmaterialien mit Strukturierung in Abhängigkeit von Anteil an MBO. Dabei ist der MBO-Anteil auf der X-Achse angegeben. Die Materialgüte entspricht dem Verhältnis von Steuerbarkeit zu dielektrischem Verlust und ist dimensionslos auf der Y-Achse angegeben. Die Punkte 600 geben beispielhaft ermittelte Werte für herkömmliche unstrukturierte Kompositmaterialien an. Die Punkte 602 geben beispielhaft ermittelte Werte für erfindungsgemäß strukturierte Kompositmaterialien an.

Figur 7 zeigt einen Vergleich des sogenannten Commutation Quality Factors bei herkömmlichen Kompositmaterialien und dem erfindungsgemäßen Kompositmaterialien mit Strukturierung in Abhängigkeit von Anteil an MBO. Dabei ist der MBO-Anteil auf der X-Achse angegeben. Der Commutation Quality Factor, der ein Maß für die dielektrische Güte unter Last ist, ist dimensionslos auf der Y-Achse angegeben. Die Punkte 700 geben beispielhaft ermittelte Werte für herkömmliche unstrukturierte Kompositmaterialien an. Die Punkte 702 geben beispielhaft ermittelte Werte für erfindungsgemäß strukturierte Kompositmaterialien an.

Durch den vorgeschlagenen Strukturierungsprozess steigt durch die Umverteilung des elektrischen Feldes innerhalb des Kompositmaterials die Steuerbarkeit bei konstanter Zusammensetzung erheblich, während die dielektrischen Verluste sich nicht oder nur unmerklich erhöhen, insbesondere unter Steuerlast, wo die Verluste denen der konventionellen Komposite in etwa entsprechen oder sie sogar unterbieten, wie sich aus den Figuren 3 bis 7 ergibt.

Das erfindungsgemäße Kompositmaterial 100 und das Verfahren zu dessen Herstellung wird nachstehend ausführlicher anhand eines Ausführungsbeispiels beschrieben.

Beispiel

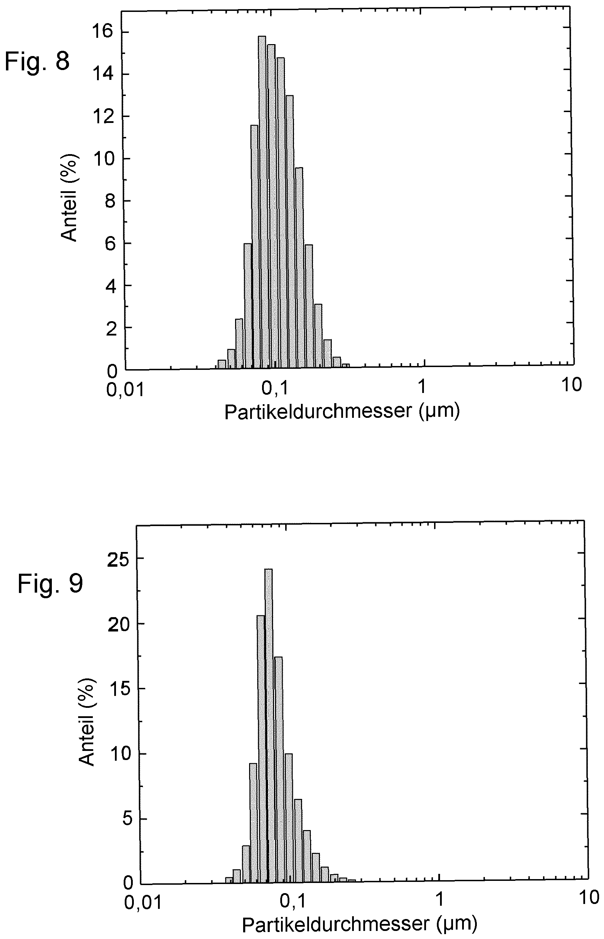

Für die vorliegenden Beispielproben wurde, aufgrund seiner hervorragenden dielektrischen Eigenschaften, $Mg_3B_2O_6$ (nachfolgend MBO) als dielektrisches Material verwendet. Dieses erfordert für einen reibungsfreien Mahlvorgang eine zweistufige Bearbeitung. Im ersten Vorgang wurden jeweils 40 g MBO in 150 ml destilliertem $H_2O$ mit 750 g Y-stabilisierten $ZrO_2$ Mahlkörpern mit einem Durchmesser von 3 mm für 135 Minuten bei 200 U/min in einer Planetenkugelmühle (Pulverisette 5 von Fritsch, Idar-Oberstein) vermahlen. Dies ermöglichte die darauffolgende Mahlung von 70 g MBO in 400 ml $H_2O$ mit 60 ml Y-stabilisierten $ZrO_2$ Mahlkörpern mit einem Durchmesser von 200 $\mu$m für 60 Minuten bei 3000 U/min in einer Rührwerkskugelmühle (MicroCer© von NETZSCH-Feinmahltechnik, Selb). Die resultierende Partikelgrößenverteilung ist in Figur 8 gezeigt. Wie aus Figur 8 zu erkennen, liegt der der $d_{50}$-Wert bei 0,10 $\mu$m.

Für die vorliegenden Beispielproben wurde, aufgrund seiner hervorragenden ferro- /paraelektrischen Eigenschaften, $Ba_{0,6}Sr_{0,4}TiO_3$ (nachfolgend BST) als paraelektrisches Material verwendet. Die Mahlung wurde direkt in der oben genannten Rührwerkskugelmühle durchgeführt. Hierbei wurden 135 g BST in 400 ml $C_3H_8O$ mit 60 ml Y-stabilisierten $ZrO_2$ Mahlkörpern mit einem Durchmesser von 200 $\mu$m für 60 Minuten bei 3000 U/min vermahlen. Die resultierende Partikelgrößenverteilung ist in Figur 9 gezeigt. Wie aus Figur 9 zu erkennen, der $d_{50}$-Wert liegt bei 0,08 $\mu$m. Für die spätere gemeinsame Dispergierung mit MBO in $H_2O$ wurde nach der Mahlung ein Lösungsmittelwechsel mittels Rotationsevaporator durchgeführt.

Das gemahlene MBO-Pulver wurde in $H_2O$ auf einen Pulveranteil von 17 Gew.-% verdünnt. Es fand daraufhin eine Granulierung mittels eines Sprühtrockners (Mobile Minor von GEA Niro, Soeborg) statt. Der Prozess wurde bei einem Stickstoffdurchfluss von 50 m3/h mit einer Gaseingangstemperatur von 250 °C und einer Gasaustrittstemperatur von 115 °C durchgeführt. Die Sprührate belief sich auf 50 ml/min mit einer Umdrehungsgeschwindigkeit des Zerstäuberrads von 16000 U/min.

Die beiden Materialien MBO und BST wurden in gewünschter Stöchiometrie hierbei zusammen in $H_2O$ gegeben und auf einen Pulveranteil von 17 Gew.-% verdünnt. Nach 30 Minuten Rührvorgang mittels einer Magnetrührplatte bei 200 U/min wurde die Suspension für 5 Minuten mit einem externen Ultraschallgerät Sonoplus HD 2200, Bandelin bei 90 % der maximalen Amplitude mit 50 % Impulslänge bearbeitet. Hiernach wurde die Dispersion wieder auf die Mag-

neterührplatte gegeben und während des nachfolgendes Granulierungsvorgangs auch dort belassen.

Die hergestellte Suspension wurde nun unter stetem Rühren in bereits verwendetem Sprühtrockner bei einem Stickstoffdurchfluss von 50 m3/h mit einer Gaseingangstemperatur von 250 °C und einer Gasaustrittstemperatur von 115 °C sprühgetrocknet. Die Sprührate belief sich auf 50 ml/min mit einer Umdrehungsgeschwindigkeit des Zerstäuberrads von 16000 U/min.

Die Granulate wurden uniaxial mit 150 MPa zu Grünkörpern verpresst. Diese Grünkörper wurden bei 1050 °C für zwei Stunden gesintert, wobei eine Aufheizrampe von 5 K/min und eine maximale Abkühlrate von 10 K/min verwendet wurden.

Bezugszeichenliste

| | |
|---|---|
| 100 | Kompositmaterial |
| 102 | dielektrisches Material |
| 104 | paraelektrisches Material |
| 106 | Cluster |
| 300 | dielektrische Güte unstrukturierter Kompositmaterialien ohne Last |
| 302 | dielektrische Güte strukturierter Kompositmaterialien ohne Last |
| 400 | dielektrische Güte unstrukturierter Kompositmaterialien im Lastzustand |
| 402 | dielektrische Güte strukturierter Kompositmaterialien im Lastzustand |
| 500 | Steuerbarkeit unstrukturierter Kompositmaterialien |
| 502 | Steuerbarkeit strukturierter Kompositmaterialien |
| 600 | Materialgüte unstrukturierter Kompositmaterialien |
| 602 | Materialgüte strukturierter Kompositmaterialien |
| 700 | Commutation Quality Factor unstrukturierter Kompositmaterialien |
| 702 | Commutation Quality Factor strukturierter Kompositmaterialien |
| S10 | Bereitstellen dielektrisches Material |
| S12 | Bereitstellen paraelektrisches Material |
| S14 | Zerkleinern dielektrisches Material |
| S16 | Zerkleinern paraelektrisches Material |
| S18 | Granulieren dielektrisches Material |
| S20 | gemeinsames Dispergieren |
| S22 | gemeinsames Granulieren |
| S24 | Formgeben |
| S26 | Sintern |

**Patentansprüche**

1. Kompositmaterial (100), umfassend

   mindestens ein dielektrisches Material (102) und
   mindestens ein paraelektrisches Material (104),
   wobei das dielektrische Material (102) zumindest teilweise als Cluster (106) ausgebildet ist und das paraelektrische Material (104) perkoliert ist.

2. Kompositmaterial (100) nach einem der vorhergehenden Ansprüche, wobei das dielektrische Material (102) als Cluster (106) mit einer mittleren Querschnittsfläche $d_{2,5}o$ von 20 $\mu m^2$ bis 0,2 $mm^2$ ausgebildet ist.

3. Kompositmaterial (100) nach dem vorhergehenden Anspruch, wobei die mittlere Querschnittsfläche $d_{2,50}$ der Cluster (106) des dielektrischen Materials (102) mit steigendem Anteil an dielektrischem Material zunimmt.

4. Kompositmaterial (100) nach einem der vorhergehenden Ansprüche, wobei bei einem Anteil des dielektrischen Materials (102) bis 65 vol.-% dieses als Cluster (106) mit einer mittleren Querschnittsfläche $d_{2,50}$ von 20 $\mu m^2$ bis 0,02 $mm^2$ ausgebildet sind, wobei bei einem Anteil des dielektrischen Materials (102) von mehr als 65 vol.-% dieses als Cluster (106) mit einer mittleren Querschnittsfläche $d_{2,50}$ von 30 $\mu m^2$ bis 0,2 $mm^2$ ausgebildet sind.

**5.** Kompositmaterial (100) nach einem der vorhergehenden Ansprüche, wobei das dielektrische Material (102) mindestens ein Material ist ausgewählt aus der Gruppe bestehend aus $Al_2O_3$, MgO, $Mg_2TiO_4$,$Mg_2SiO_4$, $Mg_2B_2O_5$, $Mg_3B_2O_6$, $B_2O_3$; $BaCu(B_2O_5)$, $BaWO_4$, wobei das paraelektrische Material (104) mindestens ein dotiertes oder undotiertes Material ist ausgewählt aus der Gruppe bestehend aus $Ba_{1-x}Sr_xTiO_3$ mit x = 0 bis 0,5 und $BaZr_xTi_{1-x}O_3$ mit x = 0 bis 0,3, bevorzugt mit x > 0 bis 0,3, und $AgTa_xNb_{1-x}O_3$ mit x = 0 bis 0,2.

**6.** Kompositmaterial (100) nach einem der vorhergehenden Ansprüche, wobei das Kompositmaterial (100) gepresst und gesintert ist.

**7.** Kompositmaterial (100) nach einem der vorhergehenden Ansprüche, wobei das Kompositmaterial (100) eine Materialgüte von mindestens 30 und bevorzugt mindestens 35 aufweist und/oder wobei das Kompositmaterial (100) einen Commutation Quality Factor (CQF) von mindestens 1000 und bevorzugt mindestens 1500 aufweist.

**8.** Verfahren zum Herstellen eines Kompositmaterials (100), umfassend

- Bereitstellen eines dielektrischen Materials (102),
- Bereitstellen eines paraelektrischen Materials,
- Ausbilden des dielektrischen Materials (102) zumindest teilweise als Cluster (106),
- zumindest teilweises Beschichten der Cluster (106) mit dem paraelektrischen Material,
- Formgebung des dielektrischen Materials (102) und des paraelektrischen Materials nach dem Beschichten der Cluster (106) zu einem Kompositmaterialrohling und
- zumindest teilweises Sintern des formgegebenen Kompositmaterialrohlings zu einem zumindest teilweise dichten keramischen Kompositmaterial (100), wobei das paraelektrische Material (104) perkoliert ist

**9.** Verfahren nach dem vorhergehenden Anspruch, weiterhin umfassend Pressen und/oder vollständiges Sintern des Kompositmaterialrohlings.

**10.** Verfahren nach Anspruch 8 oder 9, wobei das dielektrische Material (102) als ein erstes Pulver bereitgestellt wird, wobei das paraelektrische Material (104) als Präkursor, Sol oder amorphe Beschichtung bereitgestellt wird, oder wobei das dielektrische Material (102) als ein erstes Pulver bereitgestellt wird, wobei das paraelektrische Material (104) als ein zweites Pulver bereitgestellt wird.

**11.** Verfahren nach einem der Ansprüche 8 bis 10, wobei das erste Pulver eine Partikelgrößenverteilung mit einem Durchmesser $d_{50}$ von 0,02 $\mu$m bis 0,5 $\mu$m und bevorzugt 0,05 $\mu$m bis 0,2 $\mu$m aufweist, wobei das zweite Pulver mit einem Durchmesser $d_{50}$ von 0,05 $\mu$m bis 0,5 $\mu$m und bevorzugt 0,08 $\mu$m bis 0,2 $\mu$m aufweist.

**12.** Verfahren nach einem der Ansprüche 8 bis 11, weiterhin umfassend Granulieren des dielektrischen Materials (102) und/oder weiterhin umfassend Sprühgranulieren des dielektrischen Materials (102), wobei das dielektrische Material (102) eine Granulatgröße von 5 $\mu$m bis 500 $\mu$m und bevorzugt von 10 $\mu$m bis 200 $\mu$m aufweist, und/oder weiterhin umfassend gemeinsames Granulieren des paraelektrischen Materials (104) und des dielektrischen Materials (102), und/oder wobei das Sintern Feld-Aktiviertes Sintern umfasst.

**13.** Kondensator, umfassend zwei Elektroden und ein Dielektrikum, wobei das Dielektrikum zwischen den Elektroden angeordnet, insbesondere eingebettet, ist, wobei das Dielektrikum aus einem Kompositmaterial (100) nach einem der Ansprüche 1 bis 7 besteht.

**14.** Interdigitalkondensator, umfassend zwei Elektroden und ein Substrat, wobei die Elektroden auf dem Substrat angeordnet sind, wobei das Substrat aus einem Kompositmaterial (100) nach einem der Ansprüche 1 bis 7 besteht.

**15.** Kondensator nach einem der Ansprüche 13 bis 14, wobei der Kondensator für ein Hochfrequenzbauteil oder Hochfrequenzsystem ausgebildet ist, wobei ein Frequenzbereich des Hochfrequenzbauteils oder Hochfrequenzsystems von 10 MHz bis 100 GHz und bevorzugt von 10 MHz bis 10 GHz ist.

104   102, 106   100

Fig. 1

10 µm

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHANG QIWEI ET AL: "Percolative properties in ferroelectric-dielectric composite ceramics", APPLIED PHYSICS LETTERS, AMERICAN INSTITUTE OF PHYSICS, 2 HUNTINGTON QUADRANGLE, MELVILLE, NY 11747, Bd. 97, Nr. 18, 4. November 2010 (2010-11-04), Seiten 182903-182903, XP012137533, ISSN: 0003-6951, DOI: 10.1063/1.3514246 * das ganze Dokument * ----- | 1-15 | INV. C04B35/01 C04B35/468 C04B35/47 C04B35/495 C04B35/626 C04B35/64 C04B35/645 H01G4/12 |
| X | ZHANG QIWEI ET AL: "Dielectric and Percolative Properties of Ba0.5Sr0.5TiO3-Mg3B2O6 Composite Ceramics", JOURNAL OF THE AMERICAN CERAMIC SOCIETY, Bd. 94, Nr. 4, 10. Februar 2011 (2011-02-10), Seiten 1138-1142, XP093001202, US ISSN: 0002-7820, DOI: 10.1111/j.1551-2916.2010.04165.x * Abstract; "2. Experimental Procedure"; Tabelle 1; Abbildung 2; "(3) Percolative Properties" * ----- -/-- | 1-15 | |
| | | | RECHERCHIERTE SACHGEBIETE (IPC) C04B H01G |

Der vorliegende Recherchenbericht wurde für alle Patentansprüche erstellt

| Recherchenort | Abschlußdatum der Recherche | Prüfer |
|---|---|---|
| München | 24. November 2022 | Munro, Brian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Seite 1 von 4**

Europäisches
Patentamt

European
Patent Office

Office européen
des brevets

## EUROPÄISCHER RECHERCHENBERICHT

Nummer der Anmeldung

EP 22 18 2466

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | QIWEI ZHANG ET AL: "Low Loss, High Tunability of Ba0.4Sr0.6TiO3-Mg3B2O6 Microwave Composite Ceramics : Rapid Communications of the American Ceramic Society", JOURNAL OF THE AMERICAN CERAMIC SOCIETY, Bd. 93, Nr. 9, 1. September 2010 (2010-09-01), Seiten 2560-2562, XP055733483, US ISSN: 0002-7820, DOI: 10.1111/j.1551-2916.2010.03893.x * "II, Experimental Procedure"; Abbildung 2; Tabelle 1 * ----- | 1-15 | |
| X | WIENS ALEX ET AL: "CAD-assisted modeling of high dielectric contrast composite materials", JOURNAL OF THE EUROPEAN CERAMIC SOCIETY, ELSEVIER, AMSTERDAM, NL, Bd. 37, Nr. 4, 17. November 2016 (2016-11-17), Seiten 1487-1494, XP029890791, ISSN: 0955-2219, DOI: 10.1016/J.JEURCERAMSOC.2016.10.032 * das ganze Dokument - siehe z.B. "4. Materials fabrication"; "5. Materials characterization"; Abbildung 7 und Tabelle 1 * ----- -/-- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 24. November 2022 | Munro, Brian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 22 18 2466

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TANG LINJIANG ET AL: "Ferroelectric-Dielectric Composites Model of Ba 0.5 Sr 0.5 TiO 3 /Mg 2 AO 4 (A = Ti, Si) for Tunable Application", JOURNAL OF THE AMERICAN CERAMIC SOCIETY, Bd. 97, Nr. 3, 14. Dezember 2013 (2013-12-14), Seiten 862-867, XP093001204, US ISSN: 0002-7820, DOI: 10.1111/jace.12718 Gefunden im Internet: URL:https://api.wiley.com/onlinelibrary/tdm/v1/articles/10.1111%2Fjace.12718> * "II. Experimental Procedure"; "III. Results and Discussion"; Abbildungen 1(c), 3(e), 3(f), 4 * ----- | 1-15 | |
| X | MINGWEI ZHANG ET AL: "Dielectric and tunable characteristics of BaSrTiOBaWOcomposite ceramics for microwave applications", MATERIALS RESEARCH BULLETIN, ELSEVIER, KIDLINGTON, GB, Bd. 46, Nr. 7, 11. März 2011 (2011-03-11), Seiten 1045-1050, XP028214768, ISSN: 0025-5408, DOI: 10.1016/J.MATERRESBULL.2011.03.009 [gefunden am 2011-03-21] * "2. Experimental"; Abbildung 2; Tabelle 1 * ----- -/-- | 1,5,8,13 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 24. November 2022 | Munro, Brian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

Europäisches Patentamt

European Patent Office

Office européen des brevets

# EUROPÄISCHER RECHERCHENBERICHT

**Nummer der Anmeldung**

EP 22 18 2466

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JIANG HAITAO ET AL: "Microwave Dielectric Properties and Low-Temperature Sintering of Ba 0.60 Sr 0.40 TiO 3 Ceramics", JOURNAL OF THE AMERICAN CERAMIC SOCIETY, Bd. 92, Nr. 10, 1. Oktober 2009 (2009-10-01), Seiten 2319-2322, XP093001207, US ISSN: 0002-7820, DOI: 10.1111/j.1551-2916.2009.03226.x * "II. Experimental Procedure"; Abbildung 3; Tabellen I und II * ----- | 1,5,8,13 | |
| X | ZHANG QIWEI ET AL: "RELAXOR FERROELECTRIC MATERIALS FOR MICROWAVE TUNABLE APPLICATIONS", JOURNAL OF ADVANCED DIELECTRICS, Bd. 02, Nr. 01, 1. Januar 2012 (2012-01-01), Seite 1230002, XP093001213, ISSN: 2010-135X, DOI: 10.1142/S2010135X12300022 * "5. Dielectric Tunable Properties of BaZrxTi1-xO3 Composite Ceramics" * ----- | 1,5,8,13 | **RECHERCHIERTE SACHGEBIETE (IPC)** |
| X | PENGRONG REN ET AL: "Modified tunable dielectric properties by addition of MgO on BaZrTiOceramics", MATERIALS RESEARCH BULLETIN, ELSEVIER, KIDLINGTON, GB, Bd. 46, Nr. 12, 25. August 2011 (2011-08-25), Seiten 2308-2311, XP028108190, ISSN: 0025-5408, DOI: 10.1016/J.MATERRESBULL.2011.08.054 [gefunden am 2011-09-02] * "2. Experimental Procedure"; Abbildung 2; Tabelle 2 * ----- | 1,5,8,13 | |

Der vorliegende Recherchenbericht wurde für alle Patentansprüche erstellt

| Recherchenort | Abschlußdatum der Recherche | Prüfer |
|---|---|---|
| München | 24. November 2022 | Munro, Brian |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

**Seite 4 von 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. BERTHELOT et al.** From core-shell BaTiO3@MgO to nanostructured low dielectric loss ceramics by spark plasma sintering. *J. Mater. Chem. C,* 2014, vol. 2, 683-690

- *Journal of the European Ceramic Society,* April 2017, vol. 37 (4), 1487-1494